(19) Europäisches Patentamt
European Patent Office
Office européen des brevets

(11) **EP 3 293 165 B1**

(12) **EUROPÄISCHE PATENTSCHRIFT**

(45) Veröffentlichungstag und Bekanntmachung des Hinweises auf die Patenterteilung:
**26.06.2024  Patentblatt 2024/26**

(21) Anmeldenummer: **17001351.0**

(22) Anmeldetag: **08.08.2017**

(51) Internationale Patentklassifikation (IPC):
***C05D 9/00*** *(2006.01)*

(52) Gemeinsame Patentklassifikation (CPC):
(C-Sets verfügbar)
**C05D 9/00**                                               (Forts.)

(54) **VERFAHREN ZUR HERSTELLUNG VON DÜNGEMITTELGRANULAT; DÜNGEMITTELGRANULAT**

METHOD FOR PRODUCING FERTILISER GRANULATE; FERTILISER GRANULES

PROCÉDÉ DE FABRICATION DE GRANULÉS FERTILISANTS ; GRANULÉS FERTILISANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2016  DE 102016116633**

(43) Veröffentlichungstag der Anmeldung:
**14.03.2018  Patentblatt 2018/11**

(73) Patentinhaber:
• **Glatt Ingenieurtechnik GmbH**
**99427 Weimar (DE)**
• **Seraplant GmbH**
**39340 Haldensleben (DE)**

(72) Erfinder:
• **LEIDOLPH, Lars**
**99438 Bad Berka (DE)**
• **JACOB, Michael**
**99425 Weimar (DE)**
• **BÖBER, Reinhard**
**99425 Weimar (DE)**

(74) Vertreter: **Patentanwälte Magenbauer & Kollegen Partnerschaft mbB**
**Plochinger Straße 109**
**73730 Esslingen (DE)**

(56) Entgegenhaltungen:
EP-A1- 3 037 396      EP-A2- 1 918 266
WO-A2-2006/091645   US-A1- 2004 120 867

(52) Gemeinsame Patentklassifikation (CPC): (Forts.)

C-Sets
**C05D 9/00, C05F 7/00, C05G 5/12**

**Beschreibung**

Stand der Technik

Die Erfindung geht aus von einem Verfahren zur Herstellung von Düngemittelgranulat nach Patentanspruch 1 sowie einem Düngemittelgranulat nach Patentanspruch 12.

Die Erfindung betrifft ein Verfahren zur Herstellung von Düngemittelgranulat sowie ein Düngemittelgranulat, wobei bei dem Verfahren eine Suspension aus phosphathaltigen Sekundärrohstoffen und Mineralsäuren erzeugt wird und diese Suspension anschließend einer Granulation zugeführt wird, wobei sich die Düngemittelgranulate bilden und wobei der enthaltene $P_2O_5$-Gehalt im Düngemittelgranulat größer 75 % neutral-ammoniumcitratlöslich ist.

Phosphorerze sind wichtige Rohstoffquellen für die Herstellung einer großen Vielfalt von Phosphorprodukten, die in Industrie und Landwirtschaft Einsatz finden. Der größte Teil des weltweiten Phosphorverbrauchs entfällt auf Dünge- und Futtermittel. Damit stellen sie ein sehr wichtiges Wirtschaftsgut dar. Die nachgewiesenen Weltvorräte nehmen allerdings stark ab. Phosphat ist als Düngemittel nicht durch andere Stoffe substituierbar, was dahingehend problematisch ist, da eine intensive Landwirtschaft ohne Phosphatdüngung nicht möglich ist. Aus diesem Grund ist es notwendig, die jährlich anfallenden großen Mengen Phosphat als Bestandteil von diversen Abfällen nutzbar zu machen.

Es existieren eine ganze Reihe von Abfällen, wie beispielsweise kommunale Klärschlämme, die Phosphat enthalten. Eine zu geringe $P_2O_5$-Konzentration steht dabei jedoch oft einer direkten Verwertung als Phosphatrohstoff entgegen. Bei Aschen aus einer Monoverbrennungsanlage bzw. bei der Verbrennung des Klärschlammes mit anderen biogenen Abfällen kommt es jedoch zu einer Aufkonzentration des Phosphates. In Abhängigkeit vom eingesetzten Klärschlamm können beispielsweise Phosphatkonzentrationen von etwa 20 % und höher erreicht werden. Diese höheren Konzentrationen sind wirtschaftlich interessant. Allerdings ist eine direkte Verwendung solcher Aschen zum Beispiel als Düngemittel jedoch nicht möglich, da die wichtigen Phosphate durch den Brennprozess in eine wasserunlösliche, also nicht pflanzenverfügbare Form, überführt werden.

Im Stand der Technik sind verschiedene Ansätze zur Nutzung oder Gewinnung von Phosphor aus der Asche von Mono-Klärschlammverbrennungen bekannt. So beispielsweise die direkte Aufarbeitung der Asche in der Düngemittelindustrie, das Auswaschen der Phosphate mit heißem Wasser und anschließender Fällung oder Kristallisation oder die Eluierung der Phosphate aus der Asche mit Schwefelsäure unter Einsatz von Ionenaustauschern. Weiterhin bekannt ist der sogenannte Kepro-Prozess, der mit Säure und Hitze Phosphat gewinnt, das Seaborne-Verfahren, der Phostrip-Prozess oder das Ashdec-Verfahren.

Es sind zudem verschiedene Verfahren bekannt, bei denen das weitgehend unlösliche Phosphat aus phosphathaltigen Sekundärrohstoffen (wie beispielsweise aus Klärschlammaschen) mittels Mineralsäure aufgeschlossen wird, indem die festen phosphathaltigen Sekundärrohstoffe und die Mineralsäuren weitgehend direkt vermischt und daraus Düngemittel hergestellt werden. So ist beispielsweise aus der Offenlegungsschrift DE 10 2010 034 042 A1 ein Verfahren zur Herstellung von Phosphatdüngemittel bekannt, bei dem aus Asche aus der Monoverbrennung kommunaler Klärschlämme gegebenenfalls mit Zusätzen von Kalium- und oder eines Stickstoffträgers zunächst eine homogene Mischung erzeugt wird. Nach Vorliegen dieser homogenen Mischung wird dem laufenden Mischvorgang Orthophosphorsäure in unterschiedlichen Konzentrationen zugegeben. Dabei laufen die gewünschten Umwandlungsreaktionen und die Granulation weitgehend zeitgleich ab. Die Mischung, die Reaktion und die Granulation finden in einer Mischapparatur statt. Vorgeschlagen werden dazu Pflugscharmischer mit Messersatz, ein kontinuierlich arbeitender Durchlaufmischer oder ein Doppelwellenpaddelmischer. Bei Bedarf kann im Anschluss noch eine weitere Trocknung der Granulate erfolgen. Ein bekannter Nachteil dieser Prozessführung bei dieser Art von Verfahren ist, dass das Zusammenführung der phosphathaltigen Sekundärrohstoffe und der Mineralsäure je nach Art der Rohstoffe zu exothermen, zum Teil spontan und heftig ablaufenden Reaktionen führen kann. Eine Ursache dafür ist beispielsweise vorhandener Freikalk in dem phosphathaltigen Sekundärrohstoff, wie er beispielsweise typisch für Klärschlammaschen ist. Freikalk kann beispielsweise in Klärschlammaschen in durchaus relevanten Mengen, zum Beispiel im Bereich von 10 - 20 %, beinhaltet sein. Folglich resultieren bei Granulationsoder Extrusionsverfahren, bei denen die festen phosphathaltigen Sekundärrohstoffe und die Mineralsäuren weitgehend direkt vermischt werden, je nach Art der eingesetzten Rohstoffe kaum handhab- und kontrollierbare, spontan und heftig ablaufende Reaktionen. Schlecht handhab- und kaum kontrollierbare Reaktionen erschweren die Prozessführung und damit die Produktion mit einer gleichmäßigen Produktqualität, falls sie nicht sogar dadurch gänzlich unmöglich wird. Ein bekannter weiterer Nachteil bei dieser Art von Verfahren ist, dass aus dem weitgehend direkten Vermischen der phosphathaltigen Sekundärrohstoffe und der verdünnten oder unverdünnten Mineralsäure oft ein besonders klebriges Gemisch resultiert. Besonders typisch ist dies bei Verwendung von Phosphorsäure, wie beispielsweise aus der Offenlegungsschrift DE 10 2010 034 042 A1 bekannt. Dieses klebrige Gemisch ist schwer handhabbar, kann nur bedingt zu runden Granulaten geformt werden und führt häufig zu Prozessstörungen durch Verstopfungen von engen Passagen oder durch übermäßiges Anhaften an der Oberfläche von Anlagenbauteilen. Zudem sind Mineralsäuren korrosiv. Gelangt die Mineralsäure in Kontakt mit Anlagenbauteilen, erfolgt eine Korrosionsreaktion mit diesen, insbesondere bei Anlagenbauteilen aus Stahl, wie sie typisch sind für derartiges Apparateequipment sind. Dies ist beispielsweise bei Granulations- oder Extrusionsverfahren, bei denen die festen phosphathaltigen Sekundärrohstoffe und die Mineralsäuren weitgehend direkt vermischt werden, der Fall. Es können hier zwar Maßnahmen zur Eindämmung der Korrosion erfolgen, wie beispielsweise eine korrosionsbeständige Beschichtung der betreffenden Bauteile bzw. Apparatebauteile, jedoch erhöht eine solche Vorgehensweise die Investitionskosten weiter und ist somit teuer, zudem ist eine solche Vorgehensweise oft nur bedingt möglich und kann letztlich eine Korrosion auch nicht vollständig verhindern.

In der Offenlegungsschrift DE 10 2009 020 745 A1 ist ein Verfahren zur Gewinnung von Wertstoffen, insbesondere Phosphat, aus Klärschlammprodukten, nämlich Klärschlamm, Klärschlammasche oder Klärschlammschlacke, durch Extraktion offenbart, wobei eine Suspension des Klärschlammproduktes in Wasser, Alkohol, einem Wasser/Alkohol-Gemisch oder einer wässrigen Lösung hergestellt und gasförmiges oder überkritisches Kohlendioxid als Extraktionsmittel in diese Suspension des Klärschlammproduktes eingeleitet wird, ungelöste Feststoffe von dem flüssigen Suspendiermittel abgetrennt, Kohlendioxid aus dem Suspendiermittel entfernt und in dem Suspendiermittel gelöste Wertstoffe ausgefällt und von dem Suspendiermittel abgetrennt werden. Nachteilig an diesem Verfahren ist der sehr hohe Aufwand zu dessen Durchführung wodurch das Verfahren sehr kostenintensiv ist.

Aus der internationalen Patentanmeldung mit der Veröffentlichungsnummer WO 00/50343 A2 ist ein Verfahren bekannt, bei dem Verbrennungsasche mit Schwefelsäure aufgeschlossen wird. Dabei entsteht Phosphorsäure. Zum Aufreinigen der Phosphorsäure wird eine Kombination von Ionenaustauscherfiltern eingesetzt, wobei insbesondere zur Entfernung von Eisen- und Schwermetallionen ein stark saurer Kationenaustauscher verwendet wird. Nachteilig bei einem solchen Verfahren ist unter anderem der hohe Verbrauch an Chemikalien zur Regeneration der Ionenaustauscher.

Die Patentschrift CH 697 083 A5 offenbart ein Verfahren und eine Anlage zur Rückgewinnung von Phosphor aus phosphorhaltigen Verbrennungsaschen. Dazu werden die in der Verbrennungsasche enthaltenen Phosphate durch einen Säureaufschluss in Lösung gebracht. Die so erhaltene Aufschlusslösung wird in einer Filtrationsvorrichtung vom verbleibenden Feststoff abfiltriert. Der Filterkuchen dieser Feststoffe wird entsorgt oder weiterverarbeitet. Die Lösung wird gereinigt und insbesondere Eisen und Schwermetalle werden entfernt. Aus dem so gereinigten Raffinat werden Calciumphosphate gefällt.

Die Offenlegungsschrift DE 102 06 347 A1 offenbart ein Verfahren zur Gewinnung von Phosphorverbindungen aus Verbrennungsrückständen. Dazu wird der Verbrennungsasche zum Lösen der in der Verbrennungsasche befindlichen Phosphatverbindungen verdünnte Mineralsäuren zugeführt, anschließend erfolgt die Trennung der phosphathaltigen Lösung von unlöslichen Begleitkomponenten und von durch Fällung abgeschiedenen, nicht phosphathaltigen Bestandteilen, gefolgt von der Aufbereitung der entstandenen Phosphatlösung.

Aus der Patentschrift EP 2 602 013 B1 ist ein Verfahren bekannt, bei dem die in der Klärschlammasche enthaltenen phosphorhaltigen Verbindungen durch einen Säureaufschluss mit einer verdünnten Mineralsäure in Lösung gebracht werden. Anschließend wird durch eine Filtration die Klärschlammaschen-Säure-Suspension in einen phosphorarmen Filterkuchen und ein phosphorreiches Filtrat getrennt. Die Schwermetallkationen, die aus der Klärschlammasche herausgelöst worden sind, werden anschließend abgetrennt, da sie sonst in das im letzten Verfahrensschritt ausgefällte Phosphorprodukt eingebunden werden. Dies erfolgt durch die Zugabe von einem Opfermetall. Das so metallisch abgeschiedene Schwermetallgemisch wird anschließend durch Filtration abgetrennt. Anschließend wird dem Filtrat ein Aluminiumsalz zugegeben. Durch die Zugabe einer Base wird der pH-Wert auf 2,1 bis 3,0 angehoben und die gelöst vorliegenden Phosphorverbindungen werden in Form von basischen Aluminiumphosphaten im Wesentlichen vollständig ausgefällt und mittels Filtration abgetrennt. Durch diesen tiefen Fällungs-pH-Wert von maximal 3,0 bleiben Schwermetallkationen mit höherem Fällungs-pH-Wert wie Kobalt, Chrom, Eisen, Mangan, Nickel und Zink etc. in Lösung und können von dem Produkt abgetrennt werden. Das gefällte Phosphorprodukt, d. h. das Aluminiumphosphat, kann nun entweder der Düngemittelherstellung oder der thermischen Phosphorproduktion zugeführt werden.

US 2004/0120867 A1 zeigt ein Verfahren zur Verbesserung des Nährstoffgehalts von organischem Abfallmaterial, wie bspw. Klärschlamm, durch die Aufbereitung zu Düngemittelgranulat. In einem ersten Verfahrensschritt wird aus dem organischen Abfallmaterial mit Wasser eine Suspension erzeugt. Im zweiten Verfahrensschritt wird die erzeugte Suspension anschließend in einem Reaktionsbehälter mit einer Base und einer Säure versetzt, um eine Schmelze zu erzeugen. Die Schmelze wird in einem dritten Verfahrensschritt auf eine Festbettschüttung bestehend aus feinen Partikeln in einem Granulator gesprüht, um das Wasser in der Schmelze zu verdampfen. Im vierten Verfahrensschritt wird die um das verdampfte Wasser reduzierte Schmelze im Granulator mit den feinen Partikeln gewälzt, um Granulate zu erzeugen. In einem weiteren fünften Verfahrensschritt werden die Granulate mit Ammoniak behandelt um die Produktbildungsreaktion abzuschließen. Abschließend werden die mit Ammoniak behandelten Granulate in einem Trockner getrocknet, um die Düngemittelgranulate mit verbessertem Nährstoffgehalt zu erhalten.

Die europäische Patentanmeldung EP 3 037 396 A1 offenbart ein Verfahren zur Herstellung eines phosphathaltigen Düngemittels aus Klärschlamm- oder Abfallvergärungsaschen. Das Verfahren gemäß Entgegenhaltung (2) weist 6 Verfahrensschritte auf, wobei in einem ersten Verfahrensschritt aus einer ersten Menge Asche und einer mineralischen Säure in einem ersten Gefäß eine Suspension erzeugt wird. Im zweiten Verfahrensschritt wird eine erste Teilmenge an feuchtem Feststoff aus der Suspension in ein zweites Gefäß abgetrennt und die verbleibende mineralische Säure in dem ersten Gefäß mit weiterer Asche vermischt. Die erzeugten, abgesonderten feuchten Feststoffe werden in dem zweiten Gefäß gesammelt und in zwei weiteren Verfahrensschritten durch Zugabe einer pH-neutralen, basischen oder gepufferten wässrigen Lösung aufgereinigt, insbesondere von darin enthaltenen Schwermetallionen. Im fünften Verfahrensschritt werden die aufgereinigten, feuchten Feststoffe aus dem zweiten Gefäß abgetrennt. Die Verfahrensschritte 2 bis 5 werden wiederholt. Anschließend besteht die Möglichkeit den feuchten Feststoff aus dem zweiten Gefäß in einem Nachbehandlungsschritt zu trocknen.

US 2006/091645 A2 beschreibt ein Verfahren zur Herstellung von Düngemitteln aus organischem Schlamm aus kommunalen Klärwerken der pharmazeutischen Fermentation. In einem ersten Verfahrensschritt wird der organische Schlamm mittels einer Rühreinrichtung mit einer ausreichend großen Kraft gerührt, sodass eine thixotrope Paste entsteht, die in einem zweiten Verfahrensschritt mit einer Säure versetzt wird. In einem dritten Verfahrensschritt wird die saure thixotrope Paste mit einer anorganischen Hochtemperatur-Düngemittelschmelze, die Ammoniumsalze umfasst, bei einer Temperatur größer 85 °C vermischt. Abschließend wird in einem vierten Verfahrensschritt neben einem pH-Kontrollmittel ein Härter zu der sauren Paste gegeben und das Wasser aus der Paste entfernt, um das Düngemittel zu erhalten.

Problematisch an den vier vorausgehend aufgeführten Verfahren sind zum einen die jeweils sehr aufwändige Entfernung von Schwermetallen und zum anderen der Verbleib des abgetrennten Filterkuchens als Rest- bzw. Abfallstoff.

Aus der europäischen Patentanmeldung EP 1 873 132 A1 ist ein Verfahren zur Herstellung von Phosphat und Kali (PK) enthaltenden Kombinationsdünger bekannt, bei dem die aus der Kalzinierung von Hühnerkot gewonnenen Aschereste verwertet sowie die darin enthaltenen Phosphatkomponenten mit organischer Säure und einem Katalysator, einer Erdalkalimetallverbindung zur Reaktionsführung, behandelt werden, um diese verfügbar zu machen. Es wird beschrieben, dass die Erdalkaliverbindungen notwendig sind, da die Reaktionswärme der Reaktion der Erdalkaliverbindungen und der Mineralsäure letztlich erforderlich ist, um die Phosphatphasen effektiv umzusetzen. Nach der Reaktion von Asche, Erdalkaliverbindung und Mineralsäure im vorgegebenen Verhältnis wird ein Pulver erhalten, welches in einem anschließenden Prozessschritt granuliert werden kann. Vorgeschlagen werden dazu eine Nassgranulation mit Granulierteller sowie eine anschließende notwendige Trocknung. Dieses Verfahren macht somit den Einsatz eines Katalysators erforderlich. Um ein in der Landwirtschaft einsetzbares Granulat zu erhalten, ist die Erzeugung eines Pulvers sowie dessen anschließende Aufbereitung, Granulation und erneute Trocknung notwendig. Alle Prozessschritte sind sehr aufwendig, wodurch das gesamte vorgeschlagene Verfahren sehr aufwendig in seiner Durchführung ist.

Die Offenlegungsschrift DE 10 2014 005 929 A1 beschreibt ein Verfahren zur Herstellung von phosphorhaltigem Düngemittel aus Asche aus der Monoverbrennung kommunaler Klärschlämme und/oder Asche aus der gemeinsamen Verbrennung kommunaler Klärschlämme und tierischem Knochenmaterial mit verdünnter Orthophosphorsäure unter gleichzeitiger Hinzufügung des als Katalysator wirkenden Hilfsstoffes Calciumhydrogenphosphat. Die Umsetzung der im Gemisch aus Asche enthaltenen tertiären Calciumverbindungen und Calcium-, Eisen- und Aluminiumsilikatverbindungen erfolgt mit einer speziellen Konzentration der Orthophosphorsäure zu Calciumdihydrogendiphosphat. Es entstehen mit dem als Katalysator wirkenden Calciumhydrogenphosphat die Calcium-, Eisen- und Aluminiumsilikatverbindungen zu entsprechenden sekundären und/oder primären Calcium-, Eisen- und Aluminiumsilikatdihydrogenphosphatverbindungen. Beim Aushärten mit Wasser wachsen Calciumsilicathydrat- und/oder Calciumaluminatferrit-Fasern. Das so hergestellte Produkt ist granulierfähig und wird über einen Pufferbehälter dem Pelletier-/Granulierteller zugeführt und zu Granalien aufgerollt. Die Aufgranulierung kann sowohl ein kontinuierlich als auch diskontinuierlich ablaufender Prozess sein. Dieses Granulat durchläuft anschließend einen Trocknungsprozess, um die vom vorhergehenden Verfahren abhängige Nachtrocknung zu gewährleisten.

Die europäische Patentanmeldung EP 1 918 266 A2 offenbart ein Verfahren, wobei ein Düngemittelgranulat hergestellt wird, indem zuerst die Ascherückstände der Hühnerexkremente mit einer Kaliumkomponente und/oder einem Schlackepulver zusammengebracht und danach mit einer Mineralsäure vermischt werden, wodurch gezielte Reaktionen zwischen den einzelnen Komponenten ablaufen, welche die schwerlöslichen Phosphate in verfügbare Komponenten des Düngemittels umwandeln und der Kalium- und/oder Siliziumanteil im Düngemittel größer wird. Die Reaktion zwischen der Kalium-Komponente und/oder der Schlacke mit der Säure führt aufgrund einer Neutralisationsreaktion zu einer erheblichen Wärmeentwicklung und führt zu der gewünschten Phasenumwandlung des Phosphates aus den Ascherückständen der Hühnerexkremente. Nachteilig an dieser Lösung ist, dass ohne die Zugabe der Kaliumkomponente und/oder des Schlackepulvers die Temperatur nicht ausreichen würde, um das Phosphat löslicher zu machen.

Die europäische Patentanmeldung EP 0 937 694 A1 zeigt ein Verfahren zur Reduzierung des hohen pH-Werts, der aus dem CaO-Anteil in der Hühnerexkremente-Asche resultiert, durch Zugabe und Reaktion mit einem Monoammoniumsalz oder einem Monokaliummetallsalz. Nachteilig hieran ist, dass in diesem Verfahren zuerst der pH-Wert durch Zugabe von Monoammoniumsalz oder einem Monokaliummetallsalz neutralisiert werden muss, damit das Verfahren ablaufen kann.

Die beschriebenen Verfahren zeigen die grundlegenden und bekannten Möglichkeiten der Verarbeitung von phosphathaltigen Aschen zu einem Phosphatdünger auf, die aber in der Praxis nicht die gewünschten Ergebnisse bringen und/oder nur schwer technisch unter Beachtung der wirtschaftlichen Rahmenbedingungen umsetzbar sind.

Der Erfindung liegt daher die Aufgabe zugrunde, ein wirtschaftliches, ökologisches, flexibles und einfaches Verfahren zur Herstellung von Düngemittelgranulat aus phosphorhaltigen Sekundärrohstoffen bereitzustellen. Mittels dieses Verfahrens sollen Phosphatdünger und/oder Mehrnährstoffdünger in Granulatform (Düngemittelgranulate) hergestellt werden, welche in der Land- und Forstwirtschaft sowie im Gartenbau zur Anpassung des Nährstoffangebots für die angebauten Kulturpflanzen eingesetzt werden können. Bei dem Verfahren fallen weitgehend keine Rückstände an.

Die Aufgabe wird durch ein Verfahren mit den Merkmalen des Patentanspruchs 1 gelöst, indem zuerst eine Suspension mindestens aus mindestens einem phosphorhaltigen Sekundärrohstoff und mindestens einer Mineralsäure erzeugt wird, wobei die den mindestens einen phosphathaltigen Sekundärrohstoff aufweisende Asche, Asche aus der Verbrennung von Klärschlamm und/oder Tierausscheidungen und/oder Tiermehl und/oder Gülle und/oder Gärresten ist, in der Suspension während einer Reaktion zwischen der mindestens einen einen phosphathaltigen Sekundärrohstoff aufweisenden Asche und der Mineralsäure die schwerlöslichen Phosphate des phosphathaltigen Sekundärrohstoffes zumindest teilweise gelöst und/oder zumindest teilweise in eine wasser- und/oder neutral-ammoniumcitratlösliche Phosphatphase umgewandelt werden und im Anschluss die Suspension einer Granulation zugeführt wird, wobei die in einem Fluidisierungsapparat erfolgende Granulation eine Sprühagglomeration und/oder eine Sprühgranulation ist und wodurch das Düngemittelgranulat gebildet wird und der enthaltene $P_2O_5$-Gehalt im Düngemittelgranulat größer 75 % neutral-ammoniumcitratlöslich ist. Außerdem wird die Aufgabe auch durch ein Düngemittelgranulat nach Patentanspruch 12 gelöst, welches durch das Verfahren hergestellt wird.

Die Erfindung und Ihre Vorteile

Das erfindungsgemäße Verfahren mit den kennzeichnenden Merkmalen des Patentanspruchs 1, hat demgegenüber den Vorteil, dass bei dem Verfahren zur Herstellung von Düngemittelgranulat, zuerst eine Suspension mindestens aus mindestens einem phosphathaltigen Sekundärrohstoff und mindestens einer Mineralsäure erzeugt wird, dann in der Suspension die schwerlöslichen Phosphate des mindestens einen phosphathaltigen Sekundärrohstoffes zumindest teilweise gelöst und/oder zumindest teilweise in eine wasser- und/oder neutral-ammoniumcitratlösliche Phosphatphase umgewandelt werden und abschließend diese Suspension einer Granulation zugeführt wird, wobei sich das Düngemittelgranulat bildet, sodass der enthaltene $P_2O_5$-Gehalt im Düngemittelgranulat größer 75 % neutral-ammoniumcitratlöslich ist. Durch das erfindungsgemäße Verfahren ist es möglich, verschiedenste phosphathaltige Sekundärrohstoffe effizient und kostengünstig aufzubereiten und somit als Düngemittel nutzbar zu machen. Zur Bereitstellung eines besonders kostengünstigen Verfahrens beinhaltet das erfindungsgemäße Verfahren keine Abtrennungsstufe von Schadstoffen, insbesondere von Schwermetallen. Die Einhaltung der gesetzlichen Grenzwerte für Schadstoffe in dem Düngemittel wird vielmehr durch die gezielte Auswahl der phosphathaltigen Sekundärrohstoffe gegebenenfalls in Kombination mit weiteren Komponenten sichergestellt. Bei dem erfindungsgemäßen Verfahren fallen keine Prozessrückstände an, die eingesetzten Komponenten werden technisch vollständig in Düngemittelgranulate umgesetzt.

Im Text beziehen sich die Prozentangaben (%) auf Gewichtsprozent (Gew.-% d. h. % w/w), wenn nicht anders angegeben.

Als Sekundärrohstoffe werden die Reste bezeichnet, die bei der Aufbereitung, Zubereitung oder Herstellung von etwas entstehen (Überrest) und für einen neuen Erzeugungsprozess verwendet werden. Chemische Rückstände werden auch als Abfallstoffe bezeichnet. Phosphathaltige Sekundärrohstoffe weisen einen Phosphatanteil von größer 5 % (bezogen auf $P_2O_5$) auf. Phosphathaltige Sekundärrohstoffe sind Aschen aus der Mono- oder Mitverbrennung von Klärschlamm, Tierausscheidungen, Tiermehl, Tierreste und Tierkörper, Aschen aus der Verbrennung von Gülle und Gärresten als Einzelstoff bzw. Gemische daraus. Düngemittel sind Stoffe und Stoffgemische, welche in der Land- und Forstwirtschaft sowie im Gartenbau dazu benutzt werden, das Nährstoffangebot für die angebauten Pflanzen, insbesondere Kulturpflanzen, zu ergänzen mit diversen Eigenschaften, gegebenenfalls kombiniert und/oder funktionalisiert mit weiteren Materialien.

Düngemittelgranulate sind Düngemittel in Granulatform, gemäß Anspruch 12.

Im erfindungsgemäßen Verfahren wird aus mindestens einem phosphathaltigen Sekundärrohstoff, mindestens einer verdünnten oder unverdünnten Mineralsäure und gegebenenfalls Wasser und gegebenenfalls mindestens einer weiteren Komponente, wie beispielsweise weiteren Nährstoffkomponenten und/oder alternativen Phosphatquellen, eine Suspension erzeugt. Die so erzeugte Suspension wird anschließend einer Granulation zugeführt, wobei sich die Düngemittelgranulate bilden. Die Suspensionsherstellung und damit die Reaktion der Phosphatumwandlung zwischen phosphathaltigem Sekundärrohstoff und Mineralsäure sind erfindungsgemäß von dem Prozess der Granulation getrennt, d. h. es sind zwei getrennte Prozessstufen für den Flüssigphasenprozess und die Granulierung vorhanden. Die Suspension, die mindestens aus einem phosphathaltigen Sekundärrohstoff und mindestens einer Mineralsäure erzeugt wird, kann jederzeit, d. h. zumindest bis der Granulierungsprozess startet, bspw. bei einer Sprühagglomeration auch noch im Sprühkegel der Düse, durch weitere Komponenten, wie Sekundärrohstoffe, Laugen, Salze, Urease-Hemmer, Ammonium-Stabilisatoren, Nährstoffe oder dgl. angereichert bzw. ergänzt werden. Eine Zudosierung der zusätzlichen Komponenten erfolgt nach den dem Fachmann aus dem Stand der Technik zur Zugabe von Komponenten bekannten Möglichkeiten. Durch die Art der Zusammensetzung der Suspension erfolgt in der Suspension die Umwandlung der schwerlöslichen Phosphatverbindung. Die Düngemittelgranulate weisen Phosphat in einer leichtlöslichen, gut pflanzenverfügbaren Form auf, so dass mehr als 75 % des gesamten $P_2O_5$-Gehaltes, bevorzugt mehr als 85 %, besonders bevorzugt mehr als 90 % wasserlösliche und neutral-ammoniumcitratlöslich sind. Der neutralammoncitratlösliche Phosphoranteil (P-Anteil) wird hierbei nach Anlage 2, Tabelle 4, Nr. 4.2.2 DüMV bestimmt und kann als Anhaltspunkt für die mittelfristige Verfügbarkeit des Düngephosphor (Dünge-P) herangezogen werden, d. h. über den Zeitraum von etwa einer Fruchtfolge. Der unmittelbar verfügbare P-Anteil eines Düngemittels wird durch seine Löslichkeit in Wasser beschrieben (bestimmt nach Anlage 2, Tabelle 4, Nr. 4.2.1 DüMV). Je höher der wasserlösliche P-Anteil, desto schneller bzw. leichter die Verfügbarkeit des Dünge-P für die Pflanze.

Zur Suspensionsherstellung können beispielsweise die Mineralsäure in einen Reaktionsbehälter (z. B. einen Kunststofftank mit Rührwerk) vorgelegt werden, gegebenenfalls Wasser hinzugefügt und anschließend die phosphathaltigen Sekundärrohstoffe und gegebenenfalls die Nährstoffkomponenten zudosiert werden. Auch können der oder die phosphathaltige(n) Sekundärrohstoff(e) zunächst in Wasser dispergiert und die Mineralsäure in verdünnter oder unverdünnter Form anschließend zudosiert werden. Andere Reihenfolgen der Suspensionsherstellung sind ebenfalls möglich.

Das erfindungsgemäße Erzeugen einer Rohstoffsuspension hat verschiedene verfahrenstechnische Vorteile. Die beim direkten Zusammenführen der phosphathaltigen Sekundärrohstoffe und der Mineralsäure zum Teil spontan und heftig ablaufende Reaktion wird durch das erfindungsgemäße Verfahren handhab-, kontrollier- und steuerbar. Die erfindungsgemäßen Suspensionen weisen einen deutlich höheren Wasseranteil auf als im Vergleich zu Verfahren, bei denen die phosphathaltigen Sekundärrohstoffe und verdünnte oder unverdünnte Mineralsäure quasi erdfeucht direkt vermischt und gegebenenfalls granuliert werden. Dieser höhere Wasseranteil wirkt im Prinzip als Puffer. Die Reaktion zwischen phosphathaltigen Sekundärrohstoff und der Mineralsäure, insbesondere zur Umwandlung oder Lösung der schwerlöslichen Phosphate, erfolgt erfindungsgemäß in der Suspension. Dadurch wird die Mineralsäure weitgehend aufgebraucht und die erzeugte Suspension zur weiteren Verwendung für die erfindungsgemäße nachträgliche Granulation weist nach der Reaktion erfindungsgemäß einen freien Säureanteil von kleiner 7 %, bevorzugt kleiner 3 % auf.

Durch die Wahl geeignetem Equipment kann eine Korrosion während der Suspensionsherstellung wirksam verhindert werden. Dies ist technologisch einfach zu realisieren. So können zum Beispiel Behälter, Rührwerk usw. aus Kunststoff, Keramik oder mit Keramik oder Emaille beschichtet sein. Durch den erfindungsgemäßen sehr niedrigen Anteil an freier Säure in der finalen Suspension nach der chemischen Reaktion kann eine Korrosion von Anlagenbauteilen durch die Mineralsäure bei der Granulation wirksam verhindert werden.

Der Behälter (Flüssigreaktor) in dem die Suspension hergestellt und/oder zwischengelagert wird, kann gegebenenfalls temperiert (beispielsweise gekühlt oder geheizt) werden, um die Reaktion zu steuern. Ein solcher, vorab erwähnter, Behälter kann z. B. ein Rührkesselreaktor sein.

Durch die erfindungsgemäße Erzeugung einer Suspension werden die Rohstoffkomponenten deutlich besser homogenisiert. Daraus resultiert ein besonders homogenes Produkt. Erdfeuchte Mischungen, insbesondere wenn durch spontane und heftige Reaktionen lokale Verkrustungen und Aushärtungen auftreten, führen zu Inhomogenitäten.

Im erfindungsgemäßen Verfahren erfolgt keine zwingende Abtrennung von Schadstoffen wie beispielsweise Schwermetallen. Eine Abtrennung der Schadstoffe ist jedoch in dem erfindungsgemäßen Verfahren möglich. Diese Abtrennung kann durch dem Fachmann bekannte Maßnahmen erfolgen. Entsprechend werden die Komponenten der Suspension so ausgewählt und zusammengesetzt, dass letztlich ein Düngemittelgranulat entsteht, welches den Anforderungen an die Düngemittelverordnung (DüMV) insbesondere auch bei der Schadstoffbelastung erfüllt. Dies limitiert zwar in gewisser Weise die Variationsbreite bzw. die Einsatzmenge der für das erfindungsgemäße Verfahren verwendbaren Komponenten, führt jedoch in der Konsequenz zu einem kostengünstigen Herstellungsverfahren, da insbesondere die Schadstoffabtrennung aufwendig und teuer ist.

Nach der Ausgestaltung des erfindungsgemäßen Verfahrens ist der mindestens eine phosphathaltige Sekundärrohstoff eine Asche aus der Verbrennung von Klärschlamm und/oder Tierausscheidungen und/oder Tiermehl und/oder Gülle und/oder Gärresten. Die Asche kann hierbei aus einer Monoverbrennung oder der gemeinsamen Verbrennung von Klärschlamm oder dgl. stammen.

Nach einer zusätzlichen vorteilhaften Ausgestaltung des erfindungsgemäßen Verfahrens ist die mindestens eine Mineralsäure Phosphorsäure, Salpetersäure, Schwefelsäure oder ein Gemisch aus mindestens zwei der Mineralsäuren. Die Mineralsäuren können in beliebigen Kombinationen gemischt werden, wobei die Konzentrationen der einzelnen Komponenten der Mischung ebenfalls variabel sind. Zudem können auch weitere Komponenten (Zusatzstoffe, Additive oder dgl.) zugegeben werden.

In einer bevorzugten Ausführungsform ist die verwendete Mineralsäure eine verdünnte oder unverdünnte Phosphorsäure. Im Vergleich zur Verwendung anderer Mineralsäuren wird durch den Einsatz von Phosphorsäure der Phosphorgehalt in der Mischung weiter erhöht. Damit steigt der Phosphatgehalt im Düngemittel, was insbesondere bei der Herstellung von Phosphatdüngern zu einer höheren Produktqualität führt.

In einer besonders bevorzugten Ausführungsform wird als Mineralsäure Phosphorsäure verwendet und die Zusammensetzung der Suspension so gewählt, dass bei der nachfolgenden Granulation Granulate mit einem neutral-ammoniumcitratlöslichen Anteil von größer 35 %, ganz besonders bevorzugt größer 46 % (entspricht dem sogenannten Trippelsuperphosphat) und einem wasserlöslichen Phosphatanteil von größer 25 % bzw. ganz besonders bevorzugt von größer 34 % resultieren. Das erzeugte Düngemittelgranulat weist einen neutral-ammoniumcitratlöslichen $P_2O_5$-Anteil von größer 35 % und einem wasserlöslichen $P_2O_5$-Anteil von größer 25 % auf. Hierbei ist aus dem gesamten $P_2O_5$-Anteil ein $P_2O_5$-Anteil von größer 75 % neutral-ammoniumcitratlöslich. Zudem kann es aber auch einen unlöslichen $P_2O_5$-Anteil geben, z. B. von 10 %.

Die hergestellte Suspension kann eine oder mehrere Nährstoffkomponenten beinhalten, die vorgelegt, bei der Suspensionsherstellung und/oder danach zugegeben werden können. Als Nährstoffkomponenten sind alle Stoffe zu verstehen, die das Nährstoffangebot für die angebaute Pflanze liefert oder ergänzt, um das Wachstum und die Entwicklung der Pflanzen zu steuern und/oder zu unterstützen, so beispielsweise Komponenten die Stickstoff (N) und/oder Phosphor (P) und/oder Kalium (K) und/oder Magnesium (Mg) und/oder Schwefel (S) und/oder lebensnotwendige Spurenelemente enthalten. In einer bevorzugten Ausführungsform wird der Suspension, beispielsweise nach ausreichender Reaktionszeit zwischen phosphathaltigem Sekundärrohstoff und Mineralsäure mindestens ein Ammonium-Sulfat-Salz zugegeben.

Nach einer zusätzlichen vorteilhaften Ausgestaltung des erfindungsgemäßen Verfahrens wird der Suspension mindestens eine Lauge und/oder mindestens ein Salz zugegebenen. Der so erzeugten Suspension können Laugen, basische Salze etc. zur gegebenenfalls notwendigen weiteren Reduzierung der noch vorhandenen freie Säure und/oder zur weiteren neutralisiert bzw. gewünschten pH-Werteinstellung und/oder als zusätzliche Nährstoffkomponente zugegeben werden. So wird beispielsweise in einer bevorzugten Ausführungsform als Mineralsäure eine verdünnte oder unverdünnte Schwefelsäure verwendet und nach hinreichender Reaktion zwischen phosphathaltigem Sekundärrohstoff und Schwefelsäure zur zumindest teilweisen Lösung und/oder Umwandlung der unlöslichen Phosphatphase wird der hergestellten Suspension Ammoniak zugegebenen. Dadurch weist das daraus hergestellte Düngemittel ein Ammonium-Sulfat-Salz auf, welches als zusätzlicher Pflanzennährstoffe genutzt werden kann.

In einer weiteren bevorzugten Ausführungsform ist die verwendete Mineralsäure verdünnte und/oder unverdünnte Salpetersäure und/oder verdünnte und/oder unverdünnte Schwefelsäure. Salpetersäure beinhaltet hierbei Stickstoff, die Schwefelsäure entsprechend Schwefel. Stickstoff und Schwefel sind typische Nährstoffkomponenten in Dünger. Die Verwendung von Salpeter- und/oder Schwefelsäure ist entsprechend dann besonders vorteilhaft, wenn Mehrnährstoffdünger hergestellt werden sollen und die Inhaltsstoffe der Säure als Nährstofflieferant dienen. Dabei kann gegebenenfalls und bei Bedarf die Bindungsform von Stickstoff und Schwefel in dem Reaktionsgemisch umgewandelt werden.

Nach einer zusätzlichen vorteilhaften Ausgestaltung des erfindungsgemäßen Verfahrens ist die mindestens eine Mineralsäure eine Schwefelsäure und der Suspension wird ein anderer stickstoffhaltiger Rohstoff zugegeben, wie beispielsweise Ammoniak oder dgl.. Zum Beispiel kann der Ammoniak hierbei der erzeugten Suspension in verdünnter oder unverdünnter Form beigemischt werden.

Nach einer zusätzlichen vorteilhaften Ausgestaltung des erfindungsgemäßen Verfahrens wird der Suspension mindestens ein Urease-Hemmer und/oder mindestens ein Ammonium-Stabilisator zugegeben. Die Düngemittelgranulate können Urease-Hemmern und Ammonium-Stabilisatoren zur Verbesserung der Stickstoffdüngerausnutzung und Minimierung des Verlustpotenzials enthalten oder damit beschichtet sein. Das Enzym Urease spielt im Stickstoffkreislauf des Bodens eine wichtige Rolle, denn ohne dieses Enzym wäre eine Stickstoffdüngung durch den ansonsten zersetzungsbeständigen Harnstoff nicht möglich. Der Vorgang der Umsetzung von Harnstoff in Ammonium ist die Hydrolyse. Harnstoff wird in Ammoniak und Kohlendioxid gespalten. Das dazu notwendige Enzym Urease ist im aktiven Boden allgegenwärtig. Zusammen mit Wasser dissoziiert Ammoniak in Ammonium und Hydroxid. Diese Reaktion hat einen deutlichen Anstieg des pH-Werts zur Folge und ist die Ursache für gasförmiges Entweichen von Ammoniak in die Atmosphäre. Die Höhe dieses Stickstoffverlustes kann über 20 % betragen. Ureaseinhibitoren sind chemische Verbindungen, die die Aktivität des Enzyms Urease reduzieren oder ganz verhindern. Typische Ureaseinhibitoren sind chemisch als Phosphorsäurediamide, Phosphazene und Thiole, sowie um Derivate der Hydroxamsäure und des Harnstoffs, wie beispielsweise wie PPDA und NBTPT, einzuordnen. Ammonium-Stabilisatoren werden zur Verzögerung der Nitrifikation im Boden eingesetzt und daher auch als Nitrifikationshemmstoffe bezeichnet. Diese wirken spezifisch auf die Bakteriengruppe der Nitrosomonas, weitgehend ohne andere Bodenorganismen zu beeinflussen. Ammonium wird im Boden über Nitrit zu Nitrat umgewandelt. Dieser Vorgang verläuft in Abhängigkeit von Bodeneigenschaften, Feuchtigkeit und Temperatur normalerweise innerhalb von einigen Stunden bis zu wenigen Tagen. Mit dem Zusatz von Nitrifikationshemmstoffen zu ammoniumhaltigen Düngern verlängert sich die Ammoniumphase im Boden.

Nach einer zusätzlichen vorteilhaften Ausgestaltung des erfindungsgemäßen Verfahrens wird bei der Suspensionsherstellung mindestens ein Entschäumer und/oder mindestens ein Dispergiermittel zugegeben. In einer bevorzugten Ausführungsform wird ein Entschäumer beim Herstellungsprozess der Suspension zugegebenen. Dies ist besonders dann vorteilhaft, wenn bei der Zusammenführung der einzelnen Komponenten eine starke gasbildende Reaktion einsetzt und sich eine Art Schaum ausbildet. Zum Beispiel kann der Entschäumer mit dem Wasser bzw. der Mineralsäure vorgelegt oder mit dem Wasser bzw. der Mineralsäure gemeinsam zudosiert oder separat davon zugegeben werden.

Die Suspension kann mindestens ein Dispergiermittel enthalten. Durch das Dispergiermittel kann beispielsweise die Viskosität der Suspension eingestellt werden. Durch ein geeignetes Dispergiermittel kann beispielsweise auch die maximal mögliche Konzentration an Inhaltsstoffen in der Suspension erhöht werden. Dies ist vorteilhaft, da im anschließenden Granulationsprozess weniger Wasser verdampft werden muss und bei gleicher Aufgabemenge mehr Produkt entsteht. Das senkt die Herstellungskosten.

Nach einer zusätzlichen vorteilhaften Ausgestaltung des erfindungsgemäßen Verfahrens die Zusammensetzung und die Reaktionsführung so ausgewählt werden, dass sich die Suspension durch exotherm ablaufende Reaktionen auf mindestens 50 °C erwärmt wird. Die so erwärmte Suspension wird im Anschluss daran einer Granulation zugeführt, wodurch das Düngemittelgranulat hergestellt wird. Beim Zusammenführen der Komponenten zur erfindungsgemäßen Suspension können exotherme Reaktionen, insbesondere zwischen dem phosphathaltigem Sekundärrohstoff und der Mineralsäure ablaufen. In einer besonders vorteilhaften Ausgestaltung des erfindungs-gemäßen Verfahrens wird die exotherme Reaktion so gesteuert, dass sich die Suspension auf größer 50 °C, besonders bevorzugt größer 60 °C erwärmt. Gesteuert werden kann dies zum einen durch die Auswahl der Art und deren Mischungsverhältnis von phosphathaltigen Sekundärrohstoff und/oder der Mineralsäure, gegebenenfalls in Kombination mit eingestelltem zusätzlichem Wasseranteil. Zum anderen können der Suspension Komponenten zugegebenen werden, die im Gemisch eine exotherme Reaktion bewirken oder verstärken, so beispielsweise Freikalk. Zudem ist dem Fachmann bekannt, dass die exotherme Reaktion auch über die Reihenfolge der Komponentenzugabe, die Geschwindigkeit der Zugabe und den Mischprozess selbst gesteuert werden kann. In der bevorzugten Ausführungsform wird die so erwärmte Suspension direkt ohne Zwischenkühlung der Granulation zugeführt. Dadurch wird die Reaktionswärme zumindest teilweise beim Trocknungs- und Granulationsprozess genutzt.

Im erfindungsgemäßen Verfahren wird die so erzeugte Suspension einer Granulation zugeführt, wobei sich die Düngemittelgranulate bilden. Die Suspensionsherstellung und damit die Reaktion der Phosphatumwandlung zwischen phosphathaltigem Sekundärrohstoff und Mineralsäure sind erfindungsgemäß von dem Prozess der Granulation getrennt. Die erfindungsgemäße Trennung der beiden Prozessschritte hat auch den verfahrenstechnischen Vorteil, dass die Prozessparameter optimiert und gezielt für den jeweiligen Prozessschritt eingestellt werden können. Die Kombination von verschiedenen Prozessschritten scheint zwar zunächst eleganter, führt jedoch in der Regel zu einer deutlich höheren Komplexität und damit zu einer erschwerten Prozessführung.

Gemäß der Erfindung ist die Granulation eine Sprühagglomeration und/oder eine Sprühgranulation, die in einem Fluidisierungsapparat erfolgt wie beispielsweise einer Wirbelschichtanlage oder einer Strahlschichtalage.

Die Sprühgranulation vereinigt in einem Prozessschritt die konvektive Trocknung bzw. Erstarrung und die Granulatbildung. Hierbei werden kompakte Partikel (die Granulate) durch Einsprühen feststoffhaltiger Flüssigkeiten mittels Düse, insbesondere mittels Druckdüse, die gegenüber herkömmlichen Düsen energetisch günstiger ist, in eine Wirbelschicht- oder Strahlschicht gebildet, indem das Lösungsmittel (in der Regel Wasser, o. ä.) verdampft und durch den verbleibenden Feststoff ein Partikelwachstum stattfindet. Dieser Vorgang wird häufig auch als Granulationstrocknung oder Aufbaugranulation bezeichnet. Druckdüsen werden auch häufig als Einstoffdüsen bezeichnet nutzen die eigene Energie zur Zerstäubung der zugeführten Flüssigkeit. Zusätzliche Druckluft oder Dampf sind in der Regel nicht erforderlich. Die unter Druck stehende Flüssigkeit tritt als Strahl oder Lamelle in die umgebende Gasatmosphäre aus. Je nach Düsentyp und Prozessparameter ergeben sich unterschiedlichste Sprays und Tropfengrößen. Bei Sprühgranulationsprozessen wird eine feststoffhaltige Flüssigkeit durch Sprühdüsen gleichmäßig auf Partikel geringerer Größe aufgesprüht. Diese kleineren Partikel werden als Granulationskerne bezeichnet und bestehen in der Regel aus dem gleichen Material wie der über die Flüssigphase aufgesprühte Feststoff. Sie werden entweder direkt im Prozess selbst durch interne Kernerzeugung, wie Sprühtrocknung oder Abrieb, oder andererseits durch Rückführung von Feinpartikeln oder Zerkleinerung von zu großen Granulaten aus dem Sieb-Mahl-Kreislauf gebildet und müssen somit nicht als fester Rohstoff zugeführt werden.

So kann beispielsweise zur Herstellung von Düngemittelgranulaten mittels dieser Sprühgranulation die Suspension über die Düsen des Sprühsystems in eine Wirbelschicht eingebracht werden. Das im Prozessraum vorhandene Wirbelbett besteht bevorzugt aus arteigenem Material und wird durch einen aufwärts gerichteten Luftstrom aufgewirbelt. Diese Strömung dient nicht nur zur Ausbildung der Wirbelschicht selbst, sondern sie bildet gleichzeitig das Trocknungsmittel. Der zugeführte Luftstrom gelangt durch ein Zuluftgehäuse in die Wirbelschichtanlage. Dabei liegt die Zuführungstemperatur der Prozessluft typischerweise zwischen 20 °C - 400 °C. Durch Einstellung der Trocknungsparameter können die Produktfeuchte und die Trocknungsgeschwindigkeit variiert werden. Die zugeführte Luftmenge und -temperatur bestimmen die Granulationsbedingungen in der Wirbelschicht. Das Zuluftgehäuse kann in mehrere Zuluftkammern unterteilt sein, um eine gerichtete Strömung oder verschiedene Luftmengen einstellen zu können. Die Abgrenzung des Zuluftgehäuses vom Prozessraum wird durch den Wirbelschichtboden gebildet, der zur Vergleichmäßigung der Luftströmung über den Apparatequerschnitt und zur Verhinderung eines Hindurchfallens der Wirbelschichtmasse in das Zuluftgehäuse dient. Die Suspension wird auf die in der Wirbelschicht enthaltenen Teilchen aufgedüst. Auf deren Oberfläche verdampft die Flüssigkeit und der Feststoff der eingedüsten Suspension bleibt auf den Partikeln haften, was zu einem nahezu schalenartigen Kornwachstum führt. Die verdampfte Flüssigkeit wird mit dem nun abgekühlten Fluidisierungsmittel aus dem Prozessraum über den Entspannungsraum und dem Abscheideraum aus der Wirbelschichtanlage als Abluft abgeführt. Die durch die Prozessluft aus der Wirbelschicht mitgerissenen Partikel, insbesondere der feine Staub, können beispielsweise in einer im Wirbelschichtapparat integrierten mit Querschnittserweiterungen versehenen Expansionszone und in einem daran anschließenden Filtersystem von der Luft getrennt und in das Wirbelschichtbett zurückgeführt und dort agglomeriert. Damit entsteht ein staubarmes bzw. staubfreies Produkt mit einem einstellbaren Körnungsbereich. Entstehendes Unterkorn kann dem Prozess zurückgeführt werden und entstehendes Überkorn kann aufgemahlen oder gebrochen werden und ebenfalls dem Prozess zurückgeführt werden. Damit wird technisch die gesamte Suspension vollständig in Produkt überführt. Apparate für diese bevorzugte Ausführungsform sind beispielsweise aus der Patentschrift DE 101 46 778 B4 (Verfahren und Wirbelschichtanlage zur Herstellung von kompakten Feststoffpartikeln) bekannt. Alternativ kann auch die Sprühgranulation in einem Strahlschichtapparat erfolgen. Im Gegensatz zur Wirbelschicht tritt das Prozessgas in Strahlschichtanlagen nicht über den gesamten Querschnitt der Prozesskammer ein, sondern nur über zwei oder mehrere Spalten. Es entsteht ein Prozessgasstrahl in der Mitte der Prozesskammer. Solche Apparate sind beispielsweise aus den Offenlegungsschriften DE 10 2005 037 750 A1 und/oder DE 103 22 062 A1 bekannt. Dazu wird beispielsweise in einen in axialer Richtung des Reaktionsraumes des Strahlschichtapparates liegende kreisähnliche Feststoffströmung die bei der Ausbildung der Feststoffströmung benötigte Zuluft über einen im unteren Bereich und in axialer Richtung des Reaktionsraumes liegenden Spalt zugeführt. Die Flüssigkeit wird mittels einer oder mehreren Ein- und/oder Mehrstoffdüsen an einer oder mehreren Stellen in diese Feststoffströmung eingebracht. Dadurch können die Strömungsbedingungen im Bedüsungsbereich eingestellt werden, so dass die Flüssigkeit gezielt und einstellbar in die Feststoffströmung aufgebracht werden kann. Durch die hohe Partikelbeladung in der Kernzone ergeben sich in der Bedüsungszone respektive dem Bedüsungsbereich sehr vorteilhafte Bedingungen für den Wärme- und Stoffübergang. Weiterhin wird erreicht, dass sich die Flüssigkeit weitestgehend an den Teilchen abscheidet und diese somit gleichmäßig an den Partikeloberflächen benetzt werden. Das gleichmäßige Benetzen bei gleichzeitiger hoher Feststoffzirkulation zwischen Bedüsungsbereich und Rücklaufzone(n) bewirkt, dass ein sehr gleichmäßiger Flüssigkeitsfilm auf den Materialpartikeln gebildet wird. Durch den Erstarrungsprozess erhärtet die Flüssigkeit und der Feststoff verbleibt auf der Teilchenoberfläche. Dadurch wachsen die Granulate sehr gleichförmig und homogen, was zu einer sehr engen Korngrößenverteilung und einer homogenen Partikelstruktur führt.

In einer bevorzugten Ausführungsform werden die Rohstoffkomponenten über eine Mehrstoffdüse in der Art zugeführt, dass eine erfindungsgemäß erzeugte Suspension über mindestens einen Stoffstromkanal zugeführt wird und mindestens eine weitere Rohstoffkomponente über mindestens einen davon getrennten Rohstoffkanal. Mehrstoffdüsen bieten die Möglichkeit, mehrere Flüssigkeiten (wie bspw. Suspensionen, Lösungen oder dgl.) gleichzeitig mit einer Düse und nur einem Zerstäubungsmedium (Luft, Gas oder Dampf) sehr fein zu zerstäuben. Gleichzeitig findet eine intensive Vermischung beim Austritt aus der Düsenmündung (Beispiel: Dreistoffdüse Modell 0/4 S41 Fa. Düsen-Schlick GmbH) statt. Die intensive Vermischung der erzeugten Suspension und der weiteren Komponenten kann in oder kurz außerhalb der Düse (je nach Art der Düse) erfolgen. Diese Art der Zudosierung der Edukte ist dann besonders vorteilhaft, wenn beispielsweise unterschiedliche Edukte in unerwünschter Weise miteinander reagieren. Diese unerwünschten Reaktionen können beispielsweise zu Aggregaten oder Verklumpungen führen, die die Zuleitungen oder die Düsen verstopfen können. Des Weiteren können sie beispielsweise zur Gelierung der Suspension führen und damit die Möglichkeit zum Pumpen oder Versprühen der Suspension reduzieren oder unterbinden. Vorteilhafterweise kann durch eine derartige Zudosierung der Edukte über Mehrstoffdüsen die spontan und heftig und unerwünscht ablaufende Reaktion handhab-, kontrollier- und steuerbar, da die bspw. die Reaktionsverhältnisse der Edukte einfacher einstell- und/oder steuerbar sind. Zusätzlich ist es zum Beispiel durch die Mehrstoffverdüsung auch möglich der Suspension weitere Stoffe, wie Additive, Nährstoffkomponenten, inerte Substanzen oder dgl. zuzugeben. Hierdurch kann die Suspension bspw. auf das jeweilige Einsatzgebiet maßgeschneidert werden.

Ein besonderer Vorteil dieser Ausführungsform zur Granulation der erfindungsgemäßen Düngemittelgranulate mittels Sprühagglomeration und/oder Sprühgranulation ist, dass die Granulate eine besonders sphärische Granulatform aufweisen. Es können hierdurch Granulate mit einem Formfaktor von größer 0,8, bevorzugt größer 0,85 und besonders bevorzugt größer 0,9 erzeugt werden. Eine Sphärizität im Bereich von größer 0,90 entspricht einer sehr guten Rundheit des Granulats. Eine perfekte Kugel weist eine Sphärizität (SPHT-Wert) von 1 auf.

Ein weiterer Vorteil ist, dass die Granulatgröße und die Größenverteilungsbreite zielgenau einstellbar sind. Die Granulatgröße kann beispielsweise über die Prozessführung auf für den Fachmann bekannte Art und Weise und/oder über die Art und Zusammensetzung der Suspension sowie über die Wahl der thermischen sowie strömungsmechanischen Parameter beeinflusst werden.

Der Formfaktor im Sinne der vorliegenden Erfindung ist durch moderne Partikelmesstechniken mit digitaler Bildverarbeitung präzise wie folgt bestimmbar:

$$SPHT = \frac{4 \cdot \pi \cdot A}{U \cdot 2}$$

mit A: Flächeninhalt der Projektionsfläche des Granulats; U: Umfang der Projektionsfläche des Granulats ist.

Die Sphärizität (SPHT-Wert) kann z. B. mit einem kommerziellen Messgerät Camsizer® der Firma Retsch Technology GmbH, welches mit einer CCD-Basic (1 Pixel = 75 pm) und einer CCD-Zoom-Kamera (1 Pixel = 15 pm) ausgestattet ist, gemessen werden. Die mittlere Sphärizität wird volumenbezogen angegeben, wobei das Volumen der Verteilung nach allgemein bekannten Algorithmen von der Bildanalysensoftware bestimmt wird. Definitionsgrundlage für die Messgrößen ist die DIN 66141.

Um ein sehr gutes und gleichmäßiges Ausbringen auf die Felder zu ermöglichen, weisen die mittels des erfindungsgemäßen Verfahrens erzeugten Granulate bevorzugt eine enge Granulatgrö-βenverteilung auf. Eine besonders enge Granulatgrößenverteilung führt beim maschinellen Ausbringen der Düngemittelgranulate zu der gewünschten besonders gleichmäßigen Verteilung der Düngemittelgranulate auf den Feldern. Die Granulatgrößenverteilung liegt im Bereich von 1 mm ($d_{05}$) bis 10 mm ($d_{95}$), besonders bevorzugt im Bereich von 2 mm ($d_{05}$) bis 5 mm ($d_{95}$). Die Granulatgrößenverteilungsbreite kann beispielsweise durch Wahl der Sieb- bzw. Fraktionierungsschnitte eingestellt werden.

Die Düngemittelgranulate müssen eine ausreichende Granulatfestigkeit aufweisen, um bei mechanischer Beanspruchung (z. B. Transport, Handhabung, Ausbringen auf Feldern) möglichst wenig Abrieb, Bruch und Staub zu erzeugen. Die Festigkeit der Düngemittelgranulate kann beispielsweise über die Prozessführung eingestellt werden, vorzugsweise durch geeignete Wahl der Prozessparameter und der Einstellung der Trocknungsgeschwindigkeit kann Einfluss auf die Porosität und Kompaktheit der Granulate genommen werden. Darüber hinaus wird die Festigkeit der Granulate beeinflusst. Zudem kann die Festigkeit über die Art der Rohstoffkomponenten und deren Feinheit beeinflusst werden. Zudem können dem Granulat Komponenten zugegebenen werden, die als Bindemittel wirken. Bevorzugt werden in diesem Fall solche Bindemittel zugegeben, die neben der Bindewirkung auch eine oder mehrere Nährstoffkomponenten darstellt.

Das erfindungsgemäß erzeugte Düngemittelgranulat kann bei Bedarf zusätzlich eine oder mehrere Beschichtungen erhalten. Eine Beschichtung (Coating) kann für den Erhalt der Qualität von Düngemitteln eine wichtige Rolle spielen, beispielsweise Schutz gegen eindringende Feuchtigkeit, Verringerung von Verklumpungsneigung oder um mechanische Schäden durch Handhabung bieten und damit eine Staubentwicklung zu verringern. So kann eine gegebenenfalls vorhandene Neigung zu Verklumpungen bei Transport und Lagerung der Düngemittelgranulate beispielsweise mit einer Beschichtung mit verschiedenen Wirkstoffen, die in der Regel eine oberflächenaktive Substanz (Tensid) und ein feines inertes Pulver umfassen, vermindert werden.

Außerdem können die Düngemittelgranulate eine Beschichtung erhalten, die die Wirkstofffreigabe kontrolliert einstellt. Derart beschichte (teilweise auch als verkapselte Düngemittelgranulate bezeichnet) Düngemittelgranulate sind als effektive und effiziente Quellen für eine kontrollierte Freisetzung der Nährstoffe für die Langzeitversorgung von Pflanzen bekannt. Diese Nährstoffe werden langsam und kontrolliert durch die Beschichtung der Düngerteilchen hindurch freigesetzt, was eine anhaltende Versorgung der Pflanzen ergibt. Gekapselte Düngemittelgranulate können infolge ihrer langsamen Freisetzung der Nährstoffe wirkungsvoller sein und weniger Umweltprobleme erzeugen als lösliche Dünger. Da die Nährstoffe langsam und anhaltend, nicht plötzlich und stoßartig freigesetzt werden, nehmen die Pflanzen mehr von ihnen auf; sie werden daher nicht durch den Boden hindurch ausgewaschen und auch nicht vom Grundwasser aufgenommen. Eine solche kontrollierte Wirkstofffreisetzung kann beispielsweise durch eine Beschichtung mit Schwefel realisiert werden. Auch können solche gekapselten Depotdünger durch Polymerisatbeschichtungen erzielt werden. Zur Herstellung gekapselter Dünger dieser Art kann beispielsweise das Polymerisat zunächst in einem organischen Lösungsmittel aufgelöst und dann auf das Düngemittelgranulat aufgebracht werden. Das verdampfende Lösungsmittel lässt eine sehr gleichmäßige durchgehende dünne Polymerisatschicht zurück, die die Sperrschicht des Düngers bildet.

Nach einer zusätzlichen vorteilhaften Ausgestaltung des erfindungsgemäßen Verfahrens erhält das erzeugte Düngemittelgranulat mindestens eine Beschichtung und/oder mindestens eine Funktionsschicht, wobei die Beschichtung bzw. die Funktionsschicht bei oder nach der Erzeugung des Düngemittelgranulates durch Coating (Beschichtung) in einer Wirbelschichtanlage oder einer Strahlschichtanlage aufgebracht wird. Zur Beschichtung von Granulaten sind dem Fachmann zahlreiche Verfahren und Technologien bekannt. Geeignet sind dabei alle Verfahren und Technologien, die eine gewünschte Beschichtung erzeugen.

Nach einer zusätzlichen vorteilhaften Ausgestaltung des erfindungsgemäßen Verfahrens wird mindestens eine Beschichtung bzw. Funktionsschicht durch Coating in einem Fluidisierungsapparat (beispielsweise eine Wirbelschicht- oder Strahlschichtanlage oder dgl.) und/oder Trommelapparat (beispielsweise ein Trommelcoater, ein Drehrohr oder dgl.) aufgebracht wird.

In einer bevorzugten Ausführungsform erfolgen die Granulation und die Beschichtung der erzeugten Düngemittelgranulate in einer kontinuierlichen Wirbelschicht oder Strahlschicht. Dazu erfolgt im vorderen Prozessabschnitt die Erzeugung der Düngemittelgranulate durch Einsprühen und entsprechender Sprühgranulation bzw. -agglomeration. In der gleichen Wirbelschicht- bzw. Strahlschichtanlage erfolgt bezogen auf dem Stoffstrom nachgelagert der Granulation die Beschichtung der zuvor erzeugten Düngemittelgranulate, indem eine Beschichtungsmischung über ein beispielsweise separates Sprühsystem aufgebracht wird. Bei der Sprühgranulation wird das Granulat wie beschrieben schalenförmig aufgebaut. Bei dieser bevorzugten Ausführungsform wird somit der Prozess so durchgeführt, dass mindestens die oberste Schale als Beschichtung ausgebildet wird. Dazu wird die mindestens eine Düse mit der Beschichtungsmischung beschickt, die in der kontinuierlichen Wirbelschicht die letzte oder die letzten Schichten bilden.

Nach einer zusätzlichen vorteilhaften Ausgestaltung des erfindungsgemäßen Verfahrens wird dem Granulationsprozess mindestens ein zusätzlicher Feststoff zugeführt. Diese zusätzlichen Komponenten/Stoffe können beispielsweise Fremdkeime, Inertstoffe, Hilfsstoffe, Additive oder dgl. sein. Dadurch kann die Granulation stabilisiert und/oder zusätzliche Komponenten/Stoffe in die hergestellten Granulate homogen eingearbeitet werden.

Das Verfahren hat den Vorteil, dass die Suspension als ein Spray in einer Granulationsvorrichtung mindestens aus mindestens einem phosphathaltigen Sekundärrohstoff und mindestens einer Mineralsäure durch Verdüsen erzeugt wird. Mit Spray wird hier der durch die mindestens eine Düse in der Granulationsvorrichtung erzeugte Sprühnebel bzw. Sprühstrahl bezeichnet der durch das Verdüsen der einzelnen Komponenten entsteht. Das Verdüsen der einzelnen Komponente in der Granulationsvorrichtung kann durch alle Arten von Düsen, bspw. mittels mindestens einer Druckdüse, einer Mehrstoffdüse oder dgl., erfolgen. Auch können unterschiedliche Düsen zum Einsatz kommen. Hierbei werden mindestens die mindestens eine Mineralsäure und der mindestens eine phosphathaltige Sekundärrohstoff, d.h. eine Aschesuspension, mittels mehrerer Kanäle, Düsen oder dgl. in eine Granulationsvorrichtung, d.h. einen Fluidisierungsapparat gemäß der Erfindung, verdüst. Die Reaktion zwischen der mindestens einen Säure und dem mindestens einen phosphathaltigen Sekundärrohstoff findet hierbei bereits im Sprühnebel bzw. Sprühstrahl (Spray) zumindest teilweise statt. Vorteilhafterweise wird durch eine derartige Zudosierung der Edukte die spontan und heftig ablaufende Reaktion handhab-, kontrollier- und steuerbar, da die bspw. die Reaktionsverhältnisse der Edukte einfacher einstell- und/oder steuerbar sind. Zusätzlich ist es zum Beispiel durch die Mehrstoffverdüsung auch möglich einer zu versprühenden Suspension weitere Stoffe, wie Additive, Nährstoffkomponenten, inerte Substanzen oder dgl. zuzugeben. Hierdurch kann die zu versprühende Suspension bspw. auf das jeweilige Einsatzgebiet maßgeschneidert werden. Darüber hinaus wird durch ein derartiges Verdüsen von mindestens einer Mineralsäure, und dem mindestens einen phosphathaltigen Sekundärrohstoff, von einer Aschesuspension, die Reaktionsoberfläche erhöht, so dass die Reaktion gezielt zumindest teilweise im Sprühstrahl stattfindet. Dadurch ist es möglich, verschiedenste phosphathaltige Sekundärrohstoffe effizient und kostengünstig aufzubereiten und somit als Düngemittel nutzbar zu machen. Zur Bereitstellung eines besonders kostengünstigen Verfahrens beinhaltet das erfindungsgemäße Verfahren keine Abtrennungsstufe von Schadstoffen, insbesondere von Schwermetallen. Die Einhaltung der gesetzlichen Grenzwerte für Schadstoffe in dem Düngemittel wird vielmehr durch die gezielte Auswahl der phosphathaltigen Sekundärrohstoffe gegebenenfalls in Kombination mit weiteren Komponenten sichergestellt. Bei dem erfindungsgemäßen Verfahren fallen keine Prozessrückstände an, die eingesetzten Komponenten werden technisch vollständig in Düngemittelgranulate umgesetzt.

Nach einer diesbezüglich vorteilhaften Ausgestaltung des erfindungsgemäßen Verfahrens ist der enthaltene $P_2O_5$-Gehalt im Düngemittelgranulat größer 75 % neutral-ammoniumcitratlöslich.

Das erfindungsgemäße Erzeugnis, mit den kennzeichnenden Merkmalen des Patentanspruchs 12, hat demgegenüber den Vorteil, dass das Düngemittelgranulat mit einem sphärischen Formfaktor von größer gleich 0,85 und mit einer Granulatgrößenverteilung im Bereich von 1 mm ($d_{05}$) bis 10 mm (das) und einem $P_2O_5$-Anteil größer 8 %, wobei der $P_2O_5$-Gehalt größer 75 % neutral-ammoniumcitratlöslich ist. Hierbei kann das Düngemittelgranulat beschichtet oder unbeschichtet sein.

Die für die Erfindung notwendigen Prozesse, wie beispielsweise der Granulations- und/oder der Coatingprozess können chargenweise, d. h. als Batchprozess, oder als kontinuierlicher Prozess ablaufen.

Weitere Vorteile und vorteilhafte Ausgestaltung der Erfindung sind der nachfolgenden Beschreibung und den Ansprüchen entnehmbar.

Beschreibung der Ausführungsbeispiele

Nachstehend werden zwei Ausführungsbeispiele zur Herstellung von Düngemittelgranulat näher erläutert.

Ausführungsbeispiel 1:

5 kg Klärschlammasche ($P_2O_5$ = 21,3 %) werden mit 5 kg Wasser in einem Rührbehälter vorgelegt und innig mittels Rührwerk vermischt. Dazu werden 12,5 kg einer 40 %igen Phosphorsäure über einen Zeitraum von 10 Minuten schrittweise zudosiert. Das Gemisch wird anschließend weitere 15 Minuten mittels Rührwerk homogenisiert.

Die so erzeugte Suspension hat sich auf ca. 55 °C erwärmt und wird mittels Zweistoffdüse in die Wirbelschicht einer Wirbelschichtanlage des Typs ProCell Labsystem mit einem Prozesseinsatz Vario 3 der Fa. Glatt mit einer Sprührate von ca. 3 kg/Stunde eingesprüht. Die Zulufttemperatur beträgt ca. 160 °C, die Ablufttemperatur ca. 90 °C und die Materialtemperatur ca. 100 °C.

Zu Beginn wurden 500 g arteigenes Kernmaterials mit einer mittleren Partikelgröße von 0,2 mm vorgelegt, damit von Beginn an ein Wirbelbett vorhanden ist. Dieses Kernmaterial wurde aus der Suspension mittels Sprühtrocknung zuvor erzeugt. Bei Erreichen der gewünschten mittleren Granulatgröße von ca. 4 mm wurde das Einsprühen beendet und das Granulat entnommen. Folgende Spezifikation wurde an dem Granulat ermittelt:

- Kornform rund, kompakt; Formfaktor = 0,89
- neutral-ammoniumcitratlöslichen $P_2O_5$-Anteil: 46,1 %
- wasserlöslichen $P_2O_5$-Anteil: 25,2 %
- Schwermetallkonzentration: Bei allen relevanten Schwermetallen lag die ermittelte Konzentration unterhalb der Grenzwerte der Düngemittelverordnung

Ausführungsbeispiel 2:

5 kg Klärschlammasche ($P_2O_5$ = 21,3 %) werden mit 10 kg Wasser in einem Rührbehälter vorgelegt und innig mittels Rührwerk vermischt. Dazu werden 2,9 kg einer 80 %igen Schwefelsäure über einen Zeitraum von 10 Minuten schrittweise zudosiert. Daran anschließend wird der Suspension 3,1 kg 80 %iger Ammoniak unter Rühren zugegeben. Nach weiteren 5 Minuten werden zudem 1,9 kg Mono-kalium-Phosphate ($KH_2PO_4$),

0,5 kg MgCl und 0,5 kg KCl zudosiert. Das Gemisch wird anschließend weitere 15 Minuten mittels Rührwerk homogenisiert.

Die so erzeugte Suspension hat sich auf ca. 50 °C erwärmt und wird mittels Zweistoffdüse analog Ausführungsbeispiel 1 in eine Wirbelschicht eingesprüht.

Zu Beginn wurden 500 g arteigen Kernmaterials mit einer mittleren Partikelgröße von 0,2 mm vorgelegt, damit von Beginn an ein Wirbelbett vorhanden ist. Dieses Kernmaterial wurde aus der Suspension mittels Sprühtrocknung zuvor erzeugt.

Bei Erreichen der gewünschten mittleren Granulatgröße von ca. 4 mm wurde das Einsprühen beendet und das Granulat entnommen. Folgende Spezifikation wurde an dem Granulat ermittelt:

- Kornform rund, kompakt; Formfaktor = 0,87
- neutral-ammoniumcitratlöslichen $P_2O_5$-Anteil: 16,0 %
- N-Anteil: 16,1 %
- K2O-Anteil: 8,0 %
- MgO-Anteil: 4,0 %
- S-Anteil: 6,3 %
- Schwermetallkonzentration: Bei allen relevanten Schwermetallen lag die ermittelte Konzentration unterhalb der Grenzwerte der Düngemittelverordnung

**Patentansprüche**

1. Verfahren zur Herstellung von Düngemittelgranulat, **dadurch gekennzeichnet,**

   - **dass** eine Suspension mindestens aus mindestens einer einen phosphathaltigen Sekundärrohstoff aufweisenden Asche und mindestens einer Mineralsäure erzeugt wird, wobei die den mindestens einen phosphathaltigen Sekundärrohstoff aufweisende Asche eine Asche aus der Verbrennung von Klärschlamm und/oder Tierausscheidungen und/oder Tiermehl und/oder Tierresten und/oder Tierkörpern und/oder Gülle und/oder Gärresten ist,
   - in der Suspension während einer Reaktion zwischen der mindestens einen einen phosphathaltigen Sekundärrohstoff aufweisenden Asche und der Mineralsäure die schwerlöslichen Phosphate der mindestens einen einen phosphathaltigen Sekundärrohstoff aufweisenden Asche zumindest teilweise gelöst und/oder zumindest teilweise in eine wasser- und/oder neutral-ammoniumcitratlösliche Phosphatphase umgewandelt werden und
   - diese Suspension anschließend einer Granulation zugeführt wird, wobei die in einem Fluidisierungsapparat erfolgende Granulation eine Sprühagglomeration und/oder eine Sprühgranulation ist und wobei sich das Düngemittelgranulat bildet, sodass der enthaltene $P_2O_5$-Gehalt im Düngemittelgranulat größer 75 % w/w neutral-ammoniumcitratlöslich ist.

**2.** Verfahren nach Anspruch 1, **dadurch gekennzeichnet, dass** die mindestens eine Mineralsäure Phosphorsäure, Salpetersäure, Schwefelsäure oder ein Gemisch aus mindestens zwei der Mineralsäuren ist.

**3.** Verfahren nach Anspruch 1 oder 2, **dadurch gekennzeichnet, dass** der Suspension mindestens eine Lauge und/oder mindestens ein Salz zugegebenen wird.

**4.** Verfahren nach einem der vorhergehenden Ansprüche, **dadurch gekennzeichnet, dass** die mindestens eine Mineralsäure Phosphorsäure ist und das erzeugte Düngemittelgranulat einen neutral-ammoniumcitratlöslichen $P_2O_5$-Anteil von größer 35 % w/w und einem wasserlöslichen $P_2O_5$-Anteil von größer 25 % w/w aufweist.

**5.** Verfahren nach einem der vorhergehenden Ansprüche, **dadurch gekennzeichnet, dass** die mindestens eine Mineralsäure eine Schwefelsäure ist und der Suspension eine stickstoffhaltige Verbindung zugegeben wird.

**6.** Verfahren nach einem der vorhergehenden Ansprüche, **dadurch gekennzeichnet, dass** der Suspension mindestens ein Urease-Hemmer und/oder mindestens ein Ammonium-Stabilisator zugegeben wird.

**7.** Verfahren nach einem der vorhergehenden Ansprüche, **dadurch gekennzeichnet, dass** bei der Suspensionsherstellung mindestens ein Entschäumer und/oder mindestens ein Dispergiermittel zugegeben wird.

**8.** Verfahren nach einem der vorhergehenden Ansprüche, **dadurch gekennzeichnet, dass** sich die Suspension durch exotherm ablaufende Reaktionen auf mindestens 50 °C erwärmt wird.

**9.** Verfahren nach einem der vorhergehenden Ansprüche, **dadurch gekennzeichnet, dass** das erzeugte Düngemittelgranulat mindestens eine Beschichtung erhält, wobei die Beschichtung bei oder nach der eigentlichen Erzeugung des Düngemittelgranulates aufgebracht wird

**10.** Verfahren nach einem der vorhergehenden Ansprüche, **dadurch gekennzeichnet, dass** die mindestens eine Beschichtung durch Coating in einem Fluidisierungsapparat und/oder Trommelapparat aufgebracht wird.

**11.** Verfahren nach einem der vorhergehenden Ansprüche, **dadurch gekennzeichnet, dass** dem Granulationsprozess mindestens ein zusätzlicher Feststoff zugeführt wird.

**12.** Düngemittelgranulat, hergestellt nach einem Verfahren gemäß einem der Ansprüche 1 bis 11, mit einem sphärischen Formfaktor von größer gleich 0,85, mit einer Granulatgrößenverteilung im Bereich von 1 mm $d_{05}$ bis 10 mm das und einem $P_2O_5$-Anteil größer 8 % w/w, wobei der $P_2O_5$-Gehalt größer 75 % w/w neutral-ammoniumcitratlöslich ist.

**Claims**

**1.** A method for the production of fertiliser granules, **characterised**

- **in that** a suspension is produced from at least one ash comprising at least one phosphate-containing secondary raw material and at least one mineral acid, the ash comprising the at least one phosphate-containing secondary raw material being an ash from the incineration of sewage sludge and/or animal droppings and/or animal meal and/or animal residues and/or animal bodies and/or liquid manure and/or fermentation residues,
- in the suspension, during a reaction between the ash comprising at least one phosphate-containing secondary raw material and the mineral acid, the hardly soluble phosphates of the ash comprising at least one phosphate-containing secondary raw material are at least partially dissolved and/or at least partially converted into a water- and/or neutral ammonium citrate-soluble phosphate phase and
- this suspension is then fed to a granulation, wherein the granulation which takes place in a fluidisation apparatus is a spray agglomeration and/or a spray granulation and wherein the fertiliser granules are formed so that the $P_2O_5$ content contained in the fertiliser granules is higher than 75 % w/w neutral ammonium citrate soluble.

**2.** The method according to claim 1, **characterised in that** the at least one mineral acid is phosphoric acid, nitric acid, sulphuric acid or a mixture of at least two of the mineral acids.

**3.** The method according to claim 1 or 2, **characterised in that** at least one alkali and/or at least one salt is added to the suspension.

**4.** The method according to one of the preceding claims, **characterised in that** the at least one mineral acid is phosphoric acid and the fertiliser granules produced comprise a neutral ammonium citrate-soluble $P_2O_5$ content of higher than 35 % w/w and a water-soluble $P_2O_5$ content of higher than 25 % w/w.

5. The method according to one of the preceding claims, **characterised in that** the at least one mineral acid is a sulphuric acid and a nitrogen-containing compound is added to the suspension.

6. The method according to one of the preceding claims, **characterised in that** at least one urease inhibitor and/or at least one ammonium stabiliser is added to the suspension.

7. The method according to one of the preceding claims, **characterised in that** at least one antifoaming agent and/or at least one dispersing agent is added during the preparation of the suspension.

8. The method according to one of the preceding claims, **characterised in that** the suspension is heated to at least 50 °C by exothermic reactions.

9. The method according to one of the preceding claims, **characterised in that** the fertiliser granules produced are given at least one coating, the coating being applied during or after the actual production of the fertiliser granules.

10. The Method according to one of the preceding claims, **characterised in that** the at least one coating is applied by coating in a fluidising apparatus and/or drum apparatus.

11. The Method according to one of the preceding claims, **characterised in that** at least one additional solid is added to the granulation process.

12. Fertiliser granules produced by a method according to any one of claims 1 to 11, with a spherical shape factor of greater than or equal to 0.85, with a granule size distribution in the range from 1 mm $d_{05}$ to 10 mm $d_{95}$ and a $P_2O_5$ content of higher than 8 % w/w, the $P_2O_5$ content of higher than 75 % w/w being neutral ammonium citrate soluble.

**Revendications**

1. Procédé de fabrication de granulés fertilisants, **caractérisé en ce**

- **qu'**une suspension est produite au moins à partir d'au moins une cendre présentant une matière première secondaire contenant du phosphate et d'au moins un acide minéral, dans lequel la cendre présentant l'au moins une matière première secondaire contenant du phosphate est une cendre issue de la combustion de boue de clarification et/ou de déjections d'animaux et/ou de farines animales et/ou de restes d'animaux et/ou de corps d'animaux et/ou de lisier et/ou de résidus de fermentation,
- les phosphates difficilement solubles de l'au moins une cendre présentant une matière première secondaire contenant du phosphate sont dissous au moins en partie et/ou sont transformés au moins en partie en une phase de phosphate soluble dans l'eau et/ou dans du citrate d'ammonium neutre dans la suspension pendant une réaction entre l'au moins une cendre présentant une matière première secondaire contenant du phosphate et l'acide minéral,
- puis ladite suspension est amenée à une granulation, dans lequel la granulation ayant lieu dans un appareil de fluidisation est une agglomération par pulvérisation et/ou une granulation par pulvérisation et dans lequel les granulés fertilisants se forment, si bien que la teneur en $P_2O_5$ contenue dans les granulés fertilisants supérieure à 75 % en poids est soluble dans du citrate d'ammonium neutre.

2. Procédé selon la revendication 1, **caractérisé en ce que** l'au moins un acide minéral est de l'acide phosphorique, de l'acide nitrique, de l'acide sulfurique un mélange composé d'au moins deux des acides minéraux.

3. Procédé selon la revendication 1 ou 2, **caractérisé en ce qu'**au moins une lessive alcaline et/ou au moins un sel sont ajoutés à la suspension.

4. Procédé selon l'une quelconque des revendications précédentes, **caractérisé en ce que** l'au moins un acide minéral est de l'acide phosphorique et les granulés fertilisants produits présentent une proportion de $P_2O_5$ soluble dans du citrate d'ammonium neutre supérieure à 35 % en poids et une proportion de $P_2O_5$ soluble dans l'eau supérieure à 25 % en poids.

5. Procédé selon l'une quelconque des revendications précédentes, **caractérisé en ce que** l'au moins un acide minéral est un acide sulfurique et un composé contenant de l'azote est ajouté à la suspension.

6. Procédé selon l'une quelconque des revendications précédentes, **caractérisé en ce qu'**un inhibiteur d'uréase et/ou au moins un stabilisateur d'ammonium sont ajoutés à la suspension.

7. Procédé selon l'une quelconque des revendications précédentes, **caractérisé en ce qu'**au moins un agent antimousse et/ou au moins un agent de dispersion sont ajoutés lors de la fabrication de la suspension.

8. Procédé selon l'une quelconque des revendications précédentes, **caractérisé en ce que** la suspension est réchauffée à au moins 50 °C par des réactions exothermiques.

9. Procédé selon l'une quelconque des revendications précédentes, **caractérisé en ce que** les granulés fertilisants produits obtiennent au moins un revêtement, dans lequel le revêtement est appliqué lors ou après la production à proprement parler des granulés fertilisants.

10. Procédé selon l'une quelconque des revendications précédentes, **caractérisé en ce que** l'au moins un revêtement est appliqué par enduction dans un appareil de fluidisation et/ou dans un appareil à tambour.

11. Procédé selon l'une quelconque des revendications précédentes, **caractérisé en ce qu'**au moins une matière solide supplémentaire est amenée au processus de granulation.

12. Granulés fertilisants fabriqués selon un procédé selon l'une quelconque des revendications 1 à 11, avec un facteur de forme sphérique supérieur ou égal à 0,85, avec une distribution granulométrique de granulés dans la plage de 1 mm $d_{05}$ à 10 mm $d_{95}$ et une proportion de $P_2O_5$ supérieure à 8 % en poids, dans lesquels la teneur en $P_2O_5$ supérieure à 75 % en poids est soluble dans du citrate d'ammonium neutre.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010034042 A1
- DE 102009020745 A1
- WO 0050343 A2
- CH 697083 A5
- DE 10206347 A1
- EP 2602013 B1
- US 20040120867 A1
- EP 3037396 A1

- US 2006091645 A2
- EP 1873132 A1
- DE 102014005929 A1
- EP 1918266 A2
- EP 0937694 A1
- DE 10146778 B4
- DE 102005037750 A1
- DE 10322062 A1